**Europäisches Patentamt**

**European Patent Office**

**Office européen des brevets**

(11) Veröffentlichungsnummer: **0 308 767**

**A1**

(12) **EUROPÄISCHE PATENTANMELDUNG**

(21) Anmeldenummer: **88114908.2**

(22) Anmeldetag: **13.09.88**

(51) Int. Cl.⁴: **F04B 39/04 , F16J 9/00**

(30) Priorität: **25.09.87 CH 3730/87**

(43) Veröffentlichungstag der Anmeldung:
**29.03.89 Patentblatt 89/13**

(84) Benannte Vertragsstaaten:
**AT BE DE FR GB IT**

(71) Anmelder: **Maschinenfabrik Sulzer-Burckhardt AG**
**Dornacherstrasse 210**
**CH-4002 Basel(CH)**

(72) Erfinder: **Müller, Eduard**
**Rainstrasse 13**
**CH-8356 Ettenhausen,(CH)**

(74) Vertreter: **Dipl.-Ing. H. Marsch Dipl.-Ing. K. Sparing Dipl.-Phys.Dr. W.H. Röhl**
**Patentanwälte**
**Rethelstrasse 123**
**D-4000 Düsseldorf 1(DE)**

(54) **Tauchkolbenkompressor.**

(57) Der Tauchkolbenkompressor hat im Zylinder (1) einen Führungskolben (11) in einem Führungszylinder (14) und einen Arbeitskolben (13) in einem Arbeitszylinder (15). Im Bereich der dem Arbeitskolben abgewendeten Hälfte des Führungskolbens (11) sind Mittel (114) zum Dosieren von Schmiermittel für den Führungskolben (11) vorgesehen. Damit wird der Übertritt von Schmiermittel in den Bereich des Arbeitskolbens (14) und des Arbeitsmediums stark reduziert, so dass in vielen Fällen eine aufwendige Reinigung des komprimierten Arbeitsmediums entfallen kann.

## Tauchkolbenkompressor

Die vorliegende Erfindung bezieht sich auf Tauchkolbenkompressor mit mindestens einem Zylinder, mit Arbeitskolben, vorzugsweise Labyrinthdichtungskolben, und Führungskolben mit Dichtmitteln zwischen Führungskolben und Führungszylinder im Bereich der dem Arbeitskolben näherliegenden Hälfte des Mantels des Führungskolbens.

Bei derartigen Kompressoren hat der in einem Zylinder geführte Führungskolben im wesentlichen die Funktion, den Arbeitskolben, d.h. der Kolben,der das Komprimieren des Arbeitsgases im Arbeitszylinder bewirkt, berührungslos zu führen. Um dies zu gewährleisten, muss der Arbeitskolben mit dem Führungskolben starr verbunden sein. Die Dichtung zwischen Arbeitskolben und Arbeitszylinder kann beispielsweise eine Labyrinthdichtung sein. Der Führungskolben wird mittels Kurbelwelle und Pleuelstange angetrieben und im Zylinder hin und her bewegt. Zylinder und Führungskolben werden bei bekannten Tauchkolbenkompressoren beispielsweise mit Spritzöl aus dem Kurbelgehäuse geschmiert. Es sind aber auch Schmiersysteme mit Schmiermittelkanälen zum Führungskolben und/oder Führungszylinder bekannt.

Dichtungselemente am Führungskolben oder Führungszylinder haben den Zweck, das Eindringen von Schmiermittel in den Bereich von Arbeitskolben und Arbeitszylinder zu verhindern. Dies ist notwendig, um das Erfordernis nach Reinheit bzw. Schmiermittelfreiheit des komprimierten Arbeitsgases zu erreichen, wie es etwa in der Nahrungsmittelindustrie, Pharmaindustrie oder für menschliche Atemluft der Fall ist.

Bisherige Tauchkolbenkompressoren weisen den Nachteil auf, dass die Schmierung des Führungskolbens mit einem reichlich zugeführten ölstrom oder mit reichlich Spritzöl erfolgt. Dies hat zur Folge, dass auch im kritischen Dichtungsbereich des Führungskolbens meistens mehr Schmiermittel als notwendig vorhanden ist. Ein übertreten von Schmiermittel ins Arbeitsgas kann bei diesen Kompressoren nicht immer verhindert werden. Mit kostenaufwendigen Einrichtungen für eine Reinigung des Arbeitsgases ist dieses öl nach dem Komprimieren zu entfernen.

Der Erfindung liegt die Aufgabe zugrunde, den Kompressor der eingangs genannten Art in dieser Hinsicht zu verbessern.

Diese Aufgabe wird erfindungsgemäss dadurch gelöst, dass im Bereich der dem Arbeitskolben abgewendeten Hälfte des Mantels des Führungskolbens zwischen diesem und dem Führungszylinder Mittel zum Dosieren von Schmiermittel für den Führungskolben vorhanden sind.

Durch diese Lösung ergibt sich, dass auf konstruktiv einfache Weise die Schmiermittelmenge für den Führungskolben auf eine ausreichende Menge beschränkt wird, was die Wirkung der Dichtung zum Arbeitskolben hin verbessert. Auch ohne besondere Reinigungsvorrichtungen für das komprimierte Arbeitsgas wird schon eine gute Reinheit bzw. Schmiermittelfreiheit des Arbeitsgases erreicht.

Dadurch, dass die Schmiermittelmenge im Schmierbereich, d.h. im Spalt zwischen Führungskolben und Führungszylinder, dosiert wird, wird insbesondere auch das Kriechen von Schmiermittel auf der Mantelfläche von Zylinder und/oder Kolben zum Arbeitskolben und zum Arbeitsgas hin stark reduziert oder sogar völlig unterbunden.

Die abhängigen Ansprüche beziehen sich auf besonders vorteilhafte Ausführungsformen der Erfindung.

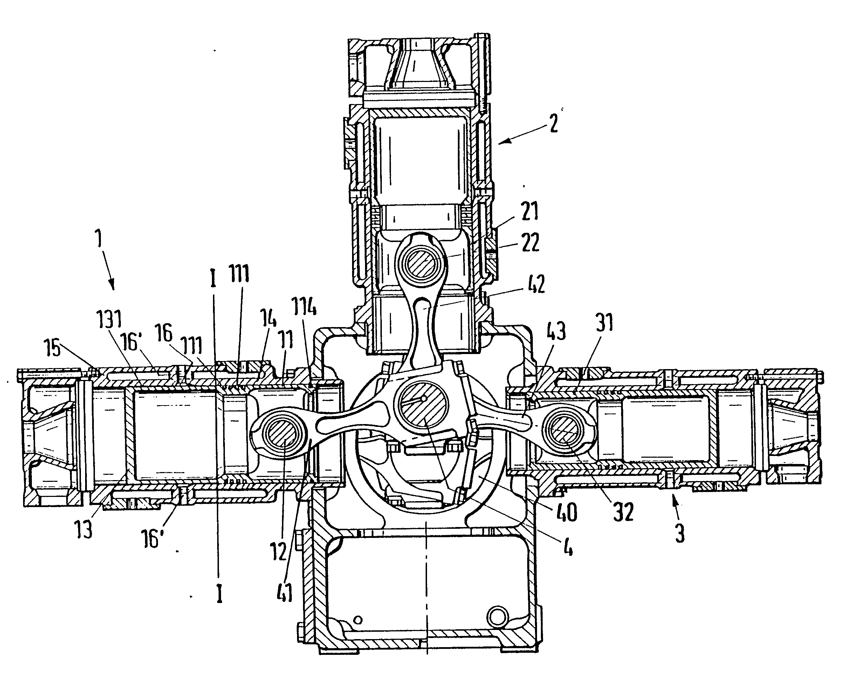

Ein Ausführungsbeispiel der Erfindung wird nachstehend anhand der Zeichnung näher erläutert, die schematisch einen Schnitt durch einen zweistufigen Kompressor mit drei Labyrinthtauchkolben zeigt.

In diesem Beispiel bilden die beiden parallel geschalteten Zylinder 1 und 2 - bei Kompressoren spricht man wie bei Kolbenmotoren allgemein von Zylindern und meint damit eine vollständige Kompressionseinheit mit z.B. Arbeitskolben, Arbeitszylinder, Führungszylinder und Führungskolben usw. -bilden die erste Stufe des Kompressors. Die zweite Stufe wird vom Zylinder 3 gebildet. Im wesentlichen sind die drei Zylinder 1, 2 und 3 ähnlich ausgebildet. Der Zylinder 3 der zweiten Stufe weist in diesem Beispiel lediglich einen kleineren Querschnitt von Arbeits- und Führungskolben bzw. Arbeits- und Führungszylinder auf. Alle drei Führungskolben 11, 21, 31, werden von einem gemeinsamen Kurbeltrieb 4 angetrieben, der über Pleuelstangen 41, 42 bzw. 43 an den Pleuellagern 12, 22 bzw. 32 mit den Führungskolben verbunden ist. Da die drei Zylinder 1, 2 und 3 weitgehend gleich sind, werden weitere Einzelheiten nur noch anhand des Zylinders 1 beschrieben. Die folgenden Erläuterungen haben also auch für die anderen Zylinder 2 und 3 Gültigkeit.

Der Führungskolben 11 und der Arbeitskolben 13 bestehen aus einem einzigen zusammenhängenden Stück und haben den gleichen Durchmesser. Der übergang vom Führungskolben 11 zum Arbeitskolben 12 liegt im Bereich der Linie I-I. Der Uebergang zwischen dem Führungszylinder 14 und dem Arbeitszylinder 15 liegt im Bereich der Ringnute 16, die einen Leckraum bildet, der mit Abflusskanälen 16' für Leckgas und/oder Lecköl verbunden ist.

Der Arbeitskolben 13 ist im Arbeitszylinder 15 berührungsfrei geführt. Die Dichtung des Arbeitskolbens 13 im Arbeitszylinder 15 ist beispielsweise eine Labyrinthdichtung 131, die im wesentlichen durch eine gewindeartige Struktur auf dem Kolbenmantel gebildet wird.

Der Führungskolben 11 weist an seinem arbeitskolbenseitigen Ende als Dichtmittel vier Kolbenringe 111 auf, die in Nuten im Mantel des Führungskolbens 11 geführt und gehalten sind. Der Führungskolben hat eine einfache Spritzölschmierung, bei der Oel aus dem Kurbelgehäuse 40 auf die Innenwand des Führungszylinders 14 gespritzt wird.

Als Mittel zum Dosieren des Schmieröls ist am kurbelgehäuseseitigen Ende des Führungskolbens 11 ein Dosierring 114 in einer Nute angebracht. Dieser Dosierring ist so gestaltet, dass vom mehr als reichlich auf die Innenwand des Führungszylinders 14 gespritzten Schmieröl beim Rücklauf des Führungskolbens 11 zum Kurbelgehäuse 40 hin ein Teil wieder direkt in das Kurbelgehäuse zurückgeschoben wird und nur die für die Schmierung ausreichende Menge Schmieröl im Spalt zwischen Führungskolben 11 und Führungszylinder 14 zurückbleibt. An Stelle eines einzigen Dosierrings können auch mehrere, untereinander gleiche oder voneinander verschiedene Dosierringe vorgesehen sein.

Die Erfindung ist im Beispiel anhand eines Kompressors erklärt, bei dem der Führungszylinder 14 und der Arbeitszylinder 15 und praktisch auch Führungskolben 11 und Arbeitskolben 13 denselben Durchmesser aufweisen. Diese Bauweise erlaubt eine kompakte Bauweise. Die Erfindung kann auch bei Kompressoren angewendet werden, bei denen die Durchmesser nicht gleich sind. Es ist auch möglich, mehrere Dosierringe in Nuten des Führungszylinders anzubringen. Statt einer Spritzölschmierung kann das Schmieröl über Kanäle im Mantel des Führungskolbens und/oder Führungszylinders zu- und/oder weggeführt wird. Ebenso müssen Arbeits- und Führungskolben kein einstückiges Bauteil sein, sondern können separate Baugruppen bilden, die starr miteinander verbunden sind. Die Erfindung soll auch nicht auf zweistufige Kompressoren beschränkt sein, sondern auch für einzylindrige oder mehr als zweistufige Kompressoren mit mehr als drei Zylindern gelten.

## Ansprüche

1. Tauchkolbenkompressor mit mindestens einem Zylinder (1), mit Arbeitskolben (13), vorzugsweise Labyrinthdichtungskolben, und Führungskolben (11) mit Dichtmitteln (111) zwischen Führungskolben (11) und Führungszylinder (14) im Bereich der dem Arbeitskolben (13) näherliegenden Hälfte des Mantels des Führungskolbens (11), **dadurch gekennzeichnet**, dass im Bereich der dem Arbeitskolben (13) abgewendeten Hälfte des Mantels des Führungskolbens (11) zwischen diesem und dem Führungszylinder (14) Mittel (114) zum Dosieren von Schmiermittel für den Führungskolben (11) vorhanden sind.

2. Tauchkolbenkompressor nach Anspruch 1, dadurch gekennzeichnet, dass als Mittel zum Dosieren von Schmiermittel ein Abstreifring (114) in einer Ringnute des Mantels des Führungskolbens (11) vorgesehen ist.

3. Tauchkolbenkompressor nach Anspruch 1, dadurch gekennzeichnet, dass als Mittel zum Dosieren von Schmiermittel ein Abstreifring in Ringnute des Führungszylinders (14) vorgesehen ist.

4. Tauchkolbenkompressor nach Anspruch 1, 2 oder 3, dadurch gekennzeichnet, dass der Führungskolben (11) und/oder der Führungszylinder (14) im Bereich der Mittel (114) zum Dosieren des Schmiermittels Schmiermittelkanäle aufweisen bzw. aufweist.

5. Tauchkolbenkompressor nach Anspruch 4, dadurch gekennzeichnet, dass der Führungskolben (11) in der Umgebung der Mittel (114) zum Dosieren von Schmiermittel Kanäle zum Ableiten von überflüssigem Schmiermittel ins Innere des Führungskolbens (11) aufweist.

6. Tauchkolbenkompressor nach Anspruch 4, dadurch gekennzeichnet, dass der Führungszylinder (14) in der Umgebung der Mittel (114) zum Dosieren von Schmiermittel Kanäle zum Ableiten von überflüssigem Schmiermittel nach aussen aufweist.

7. Tauchkolbenkompressor nach einem der Ansprüche 1 bis 6, dadurch gekennzeichnet, dass Arbeitskolben (13) und Führungskolben (11) im wesentlichen aus einem Stück bestehen.

8. Tauchkolbenkompressor nach einem der Ansprüche 1 bis 7, dadurch gekennzeichnet, dass Arbeitskolben (13) und Führungskolben (11) verschieden grosse Durchmesser aufweisen.

9. Tauchkolbenkompressor nach einem der Ansprüche 1 bis 8, dadurch gekennzeichnet, dass die Mittel (114) zum Dosieren des Schmiermittels aus einem metallischen Werkstoff bestehen.

10. Tauchkolbenkompressor nach einem der Ansprüche 1 bis 9, dadurch gekennzeichnet, dass die Mittel (114) zum Dosieren des Schmiermittels aus einem nichtmetallischen Werkstoff, insbesondere Kunststoff oder Keramik bestehen.

Europäisches
Patentamt

EUROPÄISCHER RECHERCHENBERICHT

Nummer der Anmeldung

EP 88 11 4908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 088 182 (BOSCH)<br>* Insgesamt *<br>--- | 1,2,4,5<br>,7,8,9 | F 04 B 39/04<br>F 16 J 9/00 |
| A | US-A-3 548 721 (EISENEGGER)<br>* Spalte 5, Zeilen 1-75 *<br>--- | 1,3,5,6<br>,10 | |
| A | EP-A-0 000 611 (MEILSTRUP)<br>* Figur 1; Seite 6, Zeile 1 - Seite 7,<br>Zeile 20 *<br>--- | 1-9 | |
| A | GB-A-2 168 125 (FICHT)<br>* Seite 2, Zeilen 72-116 *<br>----- | 10 | |

RECHERCHIERTE
SACHGEBIETE (Int. Cl.4)

F 04 B
F 16 J

Der vorliegende Recherchenbericht wurde für alle Patentansprüche erstellt

| Recherchenort | Abschlußdatum der Recherche | Prüfer |
|---|---|---|
| DEN HAAG | 27-10-1988 | WASSENAAR G. |